# EUROPEAN PATENT SPECIFICATION

(11) **EP 0 785 649 B1**
(45) Date of publication and mention of the grant of the patent: **21.01.2004**
(21) Application number: 96118350.6
(22) Date of filing: 15.11.1996
(51) Int. Cl.: H04L 12/40, H04L 29/14, H04L 1/00

(54) **Method and apparatus for correcting transmission errors and detecting faults during data transmission through data transferring media**
Verfahren und Vorrichtung zur Korrektur von Übertragungsfehlern und Erkennung von Fehlern während der Übertragung von Daten über ein Datenübertragungsmedium
Procédé et dispositif pour la correction d'erreurs de transmission et la détection de défauts en cours de transmission de données à travers un milieu de transmission de données

(30) Priority: 27.11.1995 IT MI952468
(43) Date of publication of application: 23.07.1997
(73) Proprietor: Italtel S.p.a., 20154 Milano (IT)
(72) Inventor: Biancalana, Alberto, 20125 Legnano (MI) (IT); Collivignarelli, Marco, 28040 Dormelletto (NO) (IT); Costa, Viscardo, 20081 Abbiategrasso (MI) (IT)
(74) Representative: Pezzoli, Ennio

(56) References cited:
- EP-A- 0 454 505
- EP-B- 0 364 700
- US-A- 5 179 577

## Description

### Field of the Invention

The present invention relates to bus systems, i.e. systems for interconnecting multiple units using a single transmission means, and more specifically it relates to a method and apparatus for correcting transmission errors and identifying faulty units during a data transmission over such kind of systems.

Bus systems are widely used to transfer data among multiple units while keeping limited the number of interconnections. More specifically, such systems may comprise a serial link (e. g., an HDLC link) over which the drivers and receivers of all units are connected, or they may comprise parallel links, even with an high level of parallelism (e. g., 32 or 64 data wires), in order to guarantee an adequately high data rate.

The units transmit the data driving the signals on the bus in separated time slots, according to a Time Division Multiple Access (TDMA) protocol, so that in a single time slot only one unit may drive the bus, while one or more units may be receiving. The assignment of each time slot to each unit may be performed according to criteria well known in the art, either centralized or distributed, and it is not described herein.

Since all of the units share the linking transmission means (either serial or parallel), a fault afflicting one unit not only prevents this unit to correctly transmit and/or receive, but may also impair, and even make impossible, data transmission among other units not afflicted by a fault. Particularly, this occurs when one or more drivers and/or receivers of the unit are faulty and keep voltage to a fixed value on the bus, where such a value may be equal or almost equal to ground (e. g., 0 V) or supply (e. g., 3.3 V) voltages; these conditions are referred to as "stuck at 0" and "stuck at 1", respectively.

### Background of the Invention

In the prior art, several arrangements have been proposed for avoiding that a faulty unit, which keeps either "stuck at 0" or "stuck at 1" one or more signals of a bus, can prevent transmission among the other units connected to the bus, thus causing a failure of the whole system.

Some of these arrangements use a Cyclic Redundancy Code (CRC) transmitted with the data, represented with a number of bit adequate to the required performance, such as the ability to correct one or more errors and to detect an even greater number of errors. For a 16-bit parallel data bus, for example, a CRC-6 (i.e., 6 bits), adequately choosen, can be able to detect all odd errors and a certain percentage of even errors, as well as to correct all the single errors. Such an arrangement, however, has some disadvantages, since the number of connections among the units is increased to transmit the CRC (e.g., 6 wires) in parallel to the string of data bits (e.g., 16 wires).

Also, the transmitter and receiver complexities are increased because they have to execute the CRC value calculation and verification, respectively. This implies also a corresponding increase of the fault rate of the structure. Moreover, since it is desirable to limit the number of CRC bits, it consequently results limited the maximum number of signals "stuck at 0" or "stuck at 1" that can be detected and corrected, then not being able to solve general fautt situations of all the drivers and/or receivers of a unit connected to the bus, which have to be mentioned as possible. This is the case, for example, of a fault of a drivers enable signal, such that they don't remain or go back to high impedance (tri-state) when the corresponding unit is not allowed to access the bus.

Another important aspect for a bus system is its ability to identify the faulty unit without impairing the operation of the not-faulty units. These arrangements are generally referred to as buses with self-diagnosis capability. This is particularly important for telecommunications systems, where it is not possible to interrupt the service for more than a certain period of time (for example, 2 hours per 40 years), according to what required by National and International Standards. But this is specially true also for other services which are particularly sensitive to a out-of-service condition, such as the aircraft on-board systems for cruise control, control systems of particularly critical and/or dangerous industrial processes, and so on.

EP-0 364 700 B1 discloses a coupling circuit for bus between a data transfer device (bus) and at least a.data transmitter and a data receiver realizing a fault tolerant bus.

Such patent however does not either suggest in any way nor mention any useful solutions for providing self-diagnosis capability to the bus.

Document EP-A-0454505 discloses a multipath transmission system for transmitting data among multiplex nodes, which are connected to three or more signal transmission lines (A-C). In a normal state, a potential difference occurs between transmission lines A and B. In an abnormal state, the communication lines C and B or the communication lines A and C are alternatively used.

Document US-A-5179577 relates to a dynamic threshold data receiver using a single comparator for both squelch and data detection; the comparator has a high-magnitude threshold when the receiver is squelched and a low-magnitude threshold when the receiver is unsquelched.

### Object of the Invention

It is an object of the present invention to identify a method and apparatus for correcting transmission errors and detecting faulty units during a data transmission through a bus.

Particular object is also to identify solutions which are easy to implement, and above all which can be implemented using CMOS silicon integrated circuits technology, in order to provide a solution for general use and which can be implemented by means of cost-effective circuitry solutions.

### Disclosure of the Invention

In accordance with the present invention, a method for correcting transmission errors and detecting faults during data transmission through data transferring media and a corresponding apparatus as set out in claims 1 and 9, respectively, are proposed.

### Brief Description of the Drawing

The features of the present invention which are believed to be novel are set forth with particularity in the appended claims. The invention, together with further objects and advantages thereof, may be understood with reference to the following description, taken in conjunction with the accompanying drawings and in which:
- figure 1 shows a diagram of an electrical bus emboding the invention;
- figure 2 shows a graph of voltage values for the case of a correctly driven bus;
- figure 3a shows the bus voltage waveform Vbus when one of the drivers is stuck at 0 and one of the other drivers is driving the bus;
- figure 3b shows the bus voltage waveform Vbus when one of the drivers is stuck at 1 and one of the other drivers is driving the bus;
- figure 4 shows a graph of voltage values of signals at input of decoding logic 60 of figure 1 for the case of a correctly driven bus;
- figure 5a shows the waveform of signals at input of decoding logic 60 of figure 1 when one of the bus drivers is stuck at 0 and one of the other drivers is driving the bus;
- figure 5b shows the waveform of signals at input of decoding logic 60 of figure 1 when one of the bus drivers is stuck at 1 and one of the other drivers is driving the bus;
- figure 6 depicts the state diagram of the finite state machine 61 of decoding logic of figure 1.

### Detailed Description of a Preferred Embodiment

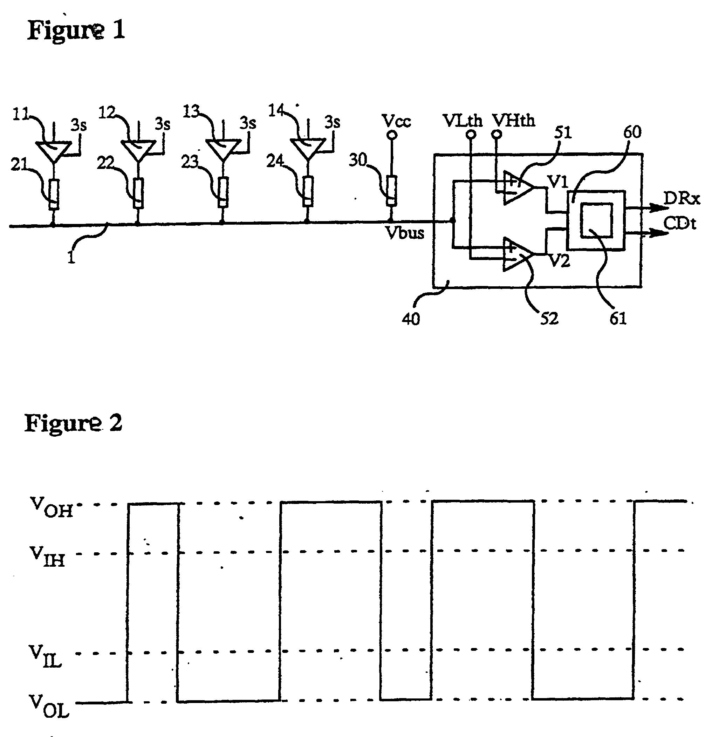

A bus arrangement according to the invention is depicted in figure 1. Some transmit units (not shown) are connected to bus 1 by means of respective drivers 11 to 14 and respective series resistors 21 to 24. Each series resistor 21 to 24 is used for:
1. protecting the respective driver against currents in excess when it is driving the bus to a value and there is a collision with a driver tending to keep the bus to an opposite value;
2. bringing the signal Vbus to a voltage value "intermediate" between the upper and lower values of voltage swing occurring under normal driving conditions, that is the typical VOH and VOL values for the techonology of the drivers employed (e.g., VOH = 3.3 V and VOL = 0 V for LVT technology, or Low Voltage TTL), when there is a collision on the bus.

In the preferred embodiment each one of the series resistors 21 to 24 has a resistance value equal to 33 ohms.

A pull-up resistor 30 is connected between bus 1 and supply voltage Vcc (e.g., Vcc = 3.3 V). This pull-up resistor 30 is used to keep the signal Vbus equal to a known value, not-floating, when no drivers 11 to 14 is driving the bus. In the preferred embodiment the pull-up resistor 30 has a resistance value of 10k ohms.

A receiver 40 connects to the bus 1 a receive unit (not shown), which receives data transmitted by any of transmit units 11 to 14.

In figure 2 a graph of bus voltage value Vbus is shown, where one of the drivers 11 to 14 is driving bus 1 during the time slot assigned to its respective transmit unit and the other drivers have their output at high impedence (tri-state), this being the case of correct driving of the bus. It is noted that the signal Vbus correctly exceeds downward the threshold VIL (e.g., VIL = 0.8 V) of the receiver when the driver is transmitting a "0" (e.g., VOL = 0 V), and, on the opposite, it exceeds upward the threshold VIH (e.g., VIH = 2 V) of the receiver when the driver is transmitting a "1" (e.g., VOH = 3.3 V), then enabling one or more receiver to recover correctly the transmitted data.

In case of collision between two from the drivers 11 to 14, the driver which is driving bus 1, during the time slot assigned to its respective transmit unit, e.g. driver 11, is not able to bring the signal Vbus to the required value because another driver, e. g. any one of drivers 12 to 14, is going on driving the bus outside the time slot assigned to its respective transmit unit.

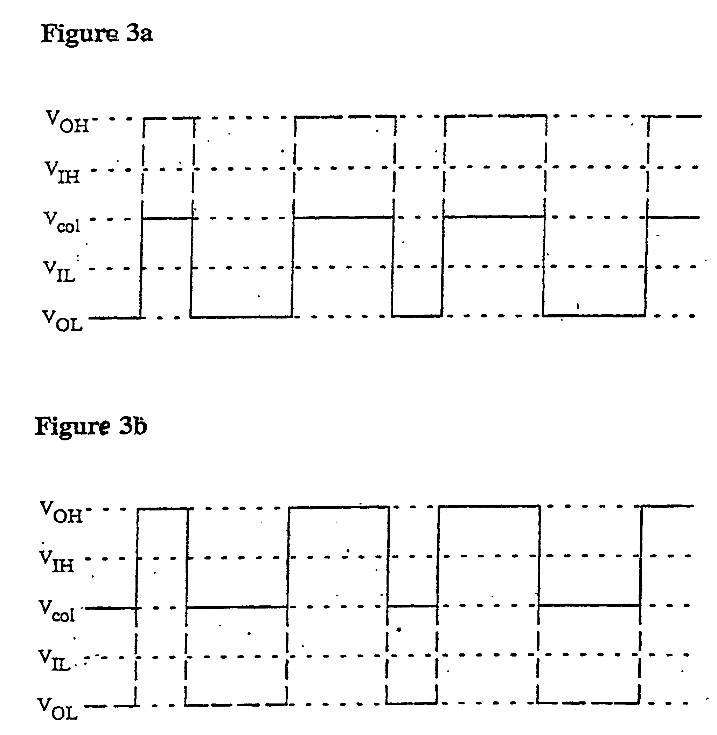

Figures 3a and 3b show the value assumed by the signal Vbus for two different exemples of collision between two drivers. Illustratively, let assume that driver 11 is bringing its output voltage to VOH and VOL for driving the bus as shown in figure 3a (dotted line) and that the driver 14 is keeping its output "stuck at 0" (i.e., a value approximatively equal to VOL) because of a fault. From figure 3a, it is noted that the signal Vbus (solid line) reaches a value Vcol when driver 11 transmits a "1" trying to bring the signal Vbus to a value greater than VIH. The value Vcol is a value intermediate between the extreme values of the voltage swing VIL to VIH for the technology of the drivers employed, such value Vcol being defined by the resistance value of series resistor 21 to 24. In this case, a receiver operating according to the prior art, would not be able to correctly recover the transmitted data, since the voltage level Vbus associated to the "1"s does not allow the receiver to understand data as "1", because Vbus is lower than the threshold value VIH for the technology of the receiver which is used.

Now, again illustratively, let assume that the driver 11 is bringing its output voltage to VOH and VOL for driving the bus as shown in figure 3b (dotted line) and that the driver 14 is keeping its output "stuck at 1" (i.e., a value approximatively equal to VOH) because of a fault. From figure 3b, it is noted that the signal Vbus (solid line) reaches a value Vcol when the driver 11 transmits a "0" trying to bring the signal Vbus to a value lower than VIL The value Vcol is a value intermediate between the extreme values of the voltage swing between VOL and VOH for the technology of the used drivers, such value Vcol being defined by the resistance value of series resistors 21 to 24. Also in this case, a receiver operating according to the prior art, would not be able to correctly recover the transmitted data, since the voltage level Vbus associated to "0"s does not allow the receiver to understand the data as "0", because Vbus is greater than the threshold value VIL for the technology of the receiver which is used.

The receiver 40 (figure 1) object of the present invention is able to correctly recover transmitted data even in presence of collision situations, such as those described above, as well as to allow to identify the driver (or the respective transmit unit) driving the bus outside the time slot assigned thereto, thus giving an advantageous self-diagnosis capability to the system.

The receiver 40 of figure 1 comprises two differential receive buffers 51 and 52 which are well known in the art (e.g., receive differential buffers RS422), and which output signals V1 and V2, respectively, to the decoding logic 60. The receive differential buffer 51 has its positive input (+) connected to bus voltage Vbus and its negative input (-) connected to high threshold voltage VHth (e.g., VHth = 2.5 V) which is fixed and acts as a reference upward. When Vbus is lower than VHth, V1 is equal to "0" (e.g., 0 V), while when Vbus is greater than VHth, V1 is equal to "1" (e.g., 3.3 V).

The receiving differential buffer 52 has its positive input (+) connected to bus voltage Vbus and its negative input (-) connected to a low threshold voltage VLth (e.g., VLth = 0.8 V) which is fixed and acts as a reference downward. When Vbus is lower than VLth, V2 is equal to "0" (e.g., 0 V), whereas when Vbus is greater than VLth, V2 is equal to "1" (e.g., 3.3 V).

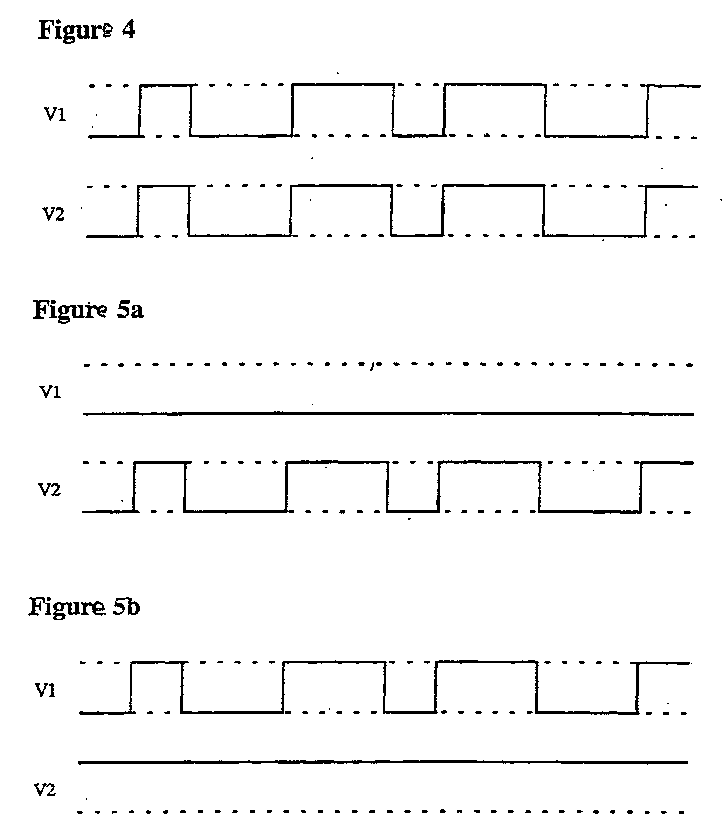

Figure 4 depicts the waveforms of signals V1 and V2 at the input of decoding logic 60 of figure 1 when bus 1 is correctly driven, that is when any of drivers 11 to 14 is driving bus 1 and the other drivers have their output at tri-state (signal 3s is active, figure 1). The waveforms of signals V1 and V2 correspond to bus voltage Vbus shown in figure 2.

As described above referring to figure 3a, in case of collision because any of drivers 11 to 14 is "stuck at 0" and another driver is trying to drive to "1" the bus 1, bus voltage Vbus takes a value lower than VHth (as well as lower than VIH, as already stated before), but greater than VLth. This means that, as shown in figure 5a, the receiving differential buffer 51 will keep its own output V1 to "0" while receiving differential buffer 52 outputs V2 equal to "0" when the driver is transmitting a "0" and V2 is equal to "1" when the driver is transmitting a "1", since in the latter case the voltage supplied on the positive input (+) of receiving differential buffer 52, i.e, Vbus = Vcol, is greater than voltage supplied on its negative input (-), i.e., VLth.

It is noted that the output V1 of receiving differential buffer 51 does not allow to recover transmitted data, in that it remains to a fixed value, equal to a "0" (e.g., 0 V). On the contrary, the output V2 of receiving differential buffer 52 corresponds to transmitted data from the driver which is driving the bus during the time slot associated to its respective transmit unit, receiving differential buffer 52 having correctly recovered the information based on crossings of low threshold VLth by bus voltage Vbus.

Now considering the above described case of collision with reference to figure 3b, where any of drivers 11 to 14 is "stuck at 1" and another one of drivers is trying to drive to "0" the bus 1, bus voltage Vbus takes a value lower than VHth, but greater than VLth (as well as greater than VIL, as already stated before). This means that, as shown in figure 5b, now it will be the receiving differential buffer 51 which will supply the output V1 equal to a "1" when the driver is transmitting a "1" and equal to a "0" when the driver is transmitting a "0", since in the latter case the voltage supplied to positive input (+) of receiving differential buffer 51, i.e. Vbus = Vcol, is lower than the voltage supplied to its negative input (-), i.e. VHth. On the contrary, as shown in figure 5b, now the receiving differential buffer 52 will keep its own output V2 equal to a "1".

Then it is noted that now it is output V2 of receiving differential buffer 52 which is remaining at a fixed value, equal to a "1" (e.g., 3.3 V), thus not allowing to recover the transmitted data. On the contrary, now it is output V1 of receiving differential buffer 51 which corresponds to transmitted data from driver which is driving the bus during the time slot associated to its respective transmit unit, receiving differential buffer 51 having correctly recovered the information based on the crossings of high threshold VHth by bus voltage Vbus.

The foregoing shows that when there is no collision both signals V1 and V2 contain the transmitted information, while during a collision only one of the two signals V1 and V2 corresponds to the transmitted data. To allow the receiver 40 (figure 1) to recover correctly the transmitted data, it is needed to identify if the transmitted data corresponds to the signal value V1 or to the signal value V2. This is impossible if signal transitions are not taken into account, besides their present value. For this reason, receiving differential buffers 51 and 52 supply signal V1 and V2, respectively, to the input of decoding logic 60 (figure 1), which obtains receive data DRx and collision indication CDt, which are then given to the receive unit (not shown). So, decoding logic 60, operating as described in the following, is able to understand when a collision occurs on bus 1 as well as to recover the correct value of data transmitted during the collision, based on the values of signals V1 and V2.

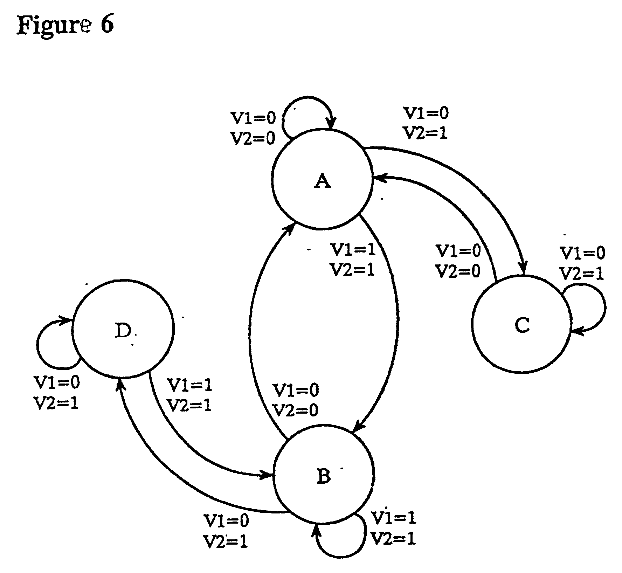

Decoding logic 60 of figure 1 operates according to state diagram of figure 6. As shown in figure 6, the finite state machine 61 of decoding logic 60 is comprised of 4 states, A, B, C, and D. States A and B are referred to as "absolute states" because they are defined in absolute by the values of two signals V1 and V2, and precisely V1=0 and V2=0 define state A while V1=1 and V2=1 define state B. States C and D are referred to as "relative states" because they are defined by values of two signals V1 and V2 relating to the state they come from (which can be either A or B), since for both C and D it results that V1=0 and V2=1.

Based on what stated before, during the correct operation of the bus (i.e., without collisions) the finite state machine 61 of decoding logic 60 will assume from time to time one from two states A and B, based on values of signals V1 and V2 at the input of decoding logic 60 defined by the data present on bus 1. In figure 6, values of signals DRx and CDt are shown, at the output of decoding logic 60, corresponding to states A and B, and precisely DRx=0, CDt=0 for state A, and DRx=1, CDt=0 for state B.

In case of collision on bus because of a driver "stuck at 0", the finite state machine 61 of decoding logic 60 will assume from time to time one from two states A and C, based on the value of signal V2, the value of signal V1 being always equal to a "0"; particularly, V2=0 will keep at, or bring to, state A the finite state machine 61, while V2=1 will keep it at, or bring it to, state C. The values of signals DRx and CDt corresponding to states A and C (figure 6) are DRx=0, CDt=0 for state A, and DRx=1, CDt=1 for state C, respectively.

Then, when finite state machine 61 is in state C, decoding logic 60 asserts signal CDt for indicating to have detected a collision on the bus during the transmission of the corresponding data. It is to be noted also that, notwithstanding the collision, the transmitted data ("1") is correctly recovered (DRx=1).

Instead, in case of collision on the bus because of a driver "stuck at 1", the finite state machine 61 of decoding logic 60 will take from time to time one from the two states B and D, based on the value of signal V1, the value of signal V2 being always equal to "1"; particularly V1=1 will keep at, or bring to, state B the finite state machine 61, while V1=0 will keep it at, or bring it to, state D. The values of signals DRx and CDt corresponding to states B and D (figure 6) are DRx=1 and CDt=0 for state B, and DRx=0 and CDt=1 for state D, respectively. Thus, when the finite state machine 61 is in state D, decoding logic 60 asserts signal CDt for indicating to have detected a collision on the bus during the transmission of corresponding data. It is to be noted that, notwithstanding the collision, the transmitted data ("0") is correctly recovered (DRx=0).

According to a further preferred embodiment, the collision indication CDt is coded by means of two bits instead of one as considered hereinbefore, in order to be able to associate to CDt a code for states A and B (e.g., CDt=00), and two different additional codes for state C (e.g., CDt=10) and state D (e.g., CDt=11), respectively. In this way, also the kind of fault having caused the collision can be identified, that is if there is a driver either "stuck at 0" (CDt=10) or "stuck at 1" (CDt=11). Moreover, if some transitions between the values of CDt corresponding to states C and D will occur, a third class of fault can be identified (faults not included within either "stuck at 0" nor "stuck at 1" faults), characterised by variations of the output voltage of the faulty device.

In a preferred embodiment, the collision indication CDt is sent to the bus management unit (not shown), this being the unit which assign the time slots to the transmit units.

Based on the collision indication CDt and the knowledge of the transmit unit enabled to transmit, the bus management unit can then identify which of the transmit units is faulty, this being the only one for which the collision on the bus is not detected during its respective time slot. The faulty transmit unit identity is then sent to the (peripheral or central) controller for the subsequent management.

In the preceding description, for semplicity, only the typical values of the various threshold voltages have been taken into account (VOH, VOL, VIH, VIL, etc.), considering that those skilled in the art will immediately understand what the dispersion of such values in a range limited between Vmax and Vmin values around such typical values will imply. Also the switching of differential receivers 51 and 52 occurs with an uncertainity in the difference between the input voltages equal to the input switching threshold for the technology used (e.g., +/- 200 mV), even if in the foregoing description such uncertainity has been disregarded for semplicity, as stated before.

Moreover, it is reminded that the invention has been described with reference to a bus with a single wire, the extention to a bus with an adequate parallelism, even of 32 or 64 wires, resulting immediate for those skilled in the art.

in the implementation of the solutions of the invention, each of the drivers 11 to 14 can be either included in its respective transmit unit or separated from it, and also the receiver 40 can be either included in or separated from its respective receive unit. In a preferred embodiment, in which both transmit and receive units are implemented by Application Specific Integrated Circuit (ASIC) CMOS technology, the drivers and receivers may advantageously be integrated with their respective units within a single chip, thus obtaining an apparent saving of real estate and reducing the cost.

Although generally in the description of the present invention we have referred to voltage, obviously the foregoing is also valid using current as a physical entity having associated the information transmitted on the bus, as it results immediately for those skilled in the art.

It must be noted that the foregoing description is only exemplary of the invention; in fact, many of its variations can be devised by those skilled in the art, such variations still falling within the object of the invention. For example, although herein it has been described a bus arrangement with some transmit units and a single receive unit, the invention can be easily extended to an arrangement comprising more than a receive unit Moreover, each transmit unit can, for example, comprise the receiver emboding the invention, and thus can recognize by itself if one or more of its bus drivers are faulty and'operate accordingly for avoiding or at least limiting the fault consequences.

Again without departing from the scope of the invention it results possible to implement the second voltage dividing means with capacitors instead of resistors 21-24, as described hereinbefore with reference to figure 1.

## Claims

1. Method for correcting transmission errors and detecting faults during data transmission through data transferring means (1) from at least one transmit unit to at least one receive unit, each transmit unit transmitting data during a respective time slot according to a Time Division Multiple Access multiplexing criterion, each of said transmit units being connected to said data transferring means (1) via respective transmitting means (11-14), said data transferring means (1) being connected to a fixed reference source (Vcc) via a voltage divider (30), and said receive unit being connected to said data transferring means (1) via respective receiving means (40),
said method comprising the steps of:
a) keeping the output of said transmitting means (11-14) in a neutral state when the respective transmit units are not authorized to transmit during said time slot;
b) driving in successive times the output of said transmitting means (11-14) to a lower or upper value based on data to be transmitted by said transmit unit which is authorized to transmit during said time slot;
c) performing said driving operation of step b) at an intermediate value (Vcol) between said upper (VOH) and lower (VOL) driving values in presence of a collision condition over said data transferring means (1);
d) detecting if the signal value (Vbus) present over said data transferring means (1) at input of said receiving means (40) is greater or lower than a high threshold value (VHth);
e) detecting if the signal value (Vbus) present over said data transferring means (1) at input of said receiving means (40) is greater or lower than a low threshold value (VLth);
f1) assigning a first predefined value (A) to a state variable of a finite state machine (61) of decoding means (60) of said receiving means (40) when in said step d) said signal (Vbus) present on said data transferring means (1) at input of said receiving means (40) was detected to be lower than said high threshold value (VHth) and in said step e) said signal (Vbus) present on said data transferring means (1) at input of said receiving means (40) was detected to be lower than said low threshold value (VLth);
f2) assigning a second predefined value (B) to said state variable of said finite state machine (61) when in said step d) said signal (Vbus) present on said data transferring means (1) at input of said receiving means (40) was detected to be greater than said high threshold value (VHth) and in said step e) said signal (Vbus) present on said data transferring means (1) at input of said receiving means (40) was detected to be greater than said low threshold value (VLth);
f3) assigning a third predefined value (C) to said state variable of said finite state machine (61) when in said step d) said signal (Vbus) present on said data transferring means (1) at input of said receiving means (40) was detected to be lower than said high threshold value (VHth), in said step e) said signal (Vbus) present on said data transferring means (1) at input of said receiving means (40) was detected to be greater than said low threshold value (VLth), and said state variable of said finite state machine (61) is equal to said first predefined value (A) or is equal to said third predefined value (C);
f4) assigning a fourth predefined value (D) to said state variable of said finite state machine (61) when in said step d) said signal (Vbus) present on said data transferring means (1) at input of said receiving means (40) was detected to be lower than said high threshold value (VHth), in said step e) said signal (Vbus) present on said data transferring means (1) at input of said receiving means (40) was detected to be greater than said low threshold value (VLth), and said state variable of said finite state machine (61) is equal to said second predefined value (B) or is equal to said fourth predefined value (D).
g) determining the correct value of data transmitted by said transmit unit, based on the state variable value (A, B, C, D) of said finite state machine (61), and outputting said correct value as receive data (DRx).

2. Method according to claim 1, further comprising the step of detecting if there is a collision between said transmit units during the data transmission through said data transferring means (1), based on the state variable value (A, B, C, D) of said finite state machine (61) , and outputting an indication of collision detection (CDt).

3. Method according to claim 1 or 2, wherein said step (g) of determining the correct value of said transmitted data and outputting said correct value as receive data (DRx) further comprises the steps of:
g1) outputting a receive data (DRx) value equal to a first logical level, when said finite state machine (61) is in the state identified by said first value (A) of said state variable;
g2) outputting a receive data (DRx) value equal to a second logical level, when said finite state machine (61) is in the state identified by said second value (B) of said state variable;
g3) outputting a receive data (DRx) value equal to said second logical level, when said finite state machine (61) is in the state identified by said third value (C) of said state variable;
g4) outputting a receive data (DRx) value equal to said first logical level, when said finite state machine (61) is in the state identified by said fourth value (D) of said state variable.

4. Method according to claim 2 or 3, wherein said step of detecting the collision and outputting said collision detection indication (CDt) further comprises the steps of:
h1) outputting an undetected collision (CDt=0) signal, when said finite state machine (61) is in a state identified by said first value (A) of said state variable;
h2) outputting said undetected collision (CDt=0) signal, when said finite state machine (61) is in a state identified by said second value (B) of said state variable;
h3) outputting a detected collision (CDt=1) signal, when said finite state machine (61) is in a state identified by said third value (C) of said state variable;
h4) outputting said detected collision (CDt=1) signal, when said finite state machine (61) is in a state identified by said fourth value (D) of said state variable.

5. Method according to claim 2 or 3, wherein said step of detecting the collision and outputting said collision detection indication (CDt) further comprises the steps of:
h1) outputting an undetected collision (CDt=00) signal, when said finite state machine (61) is in a state identified by said first value (A) of said state variable;
h2) outputting said undetected collision (CDt=00) signal, when said finite state machine (61) is in a state identified by said second value (B) of said state variable;
h3) outputting a first detected collision (CDt=10) signal, when said finite state machine (61) is in a state identified by said third value (C) of said state variable;
h4) outputting a second detected collision (CDt=11) signal, when said finite state machine (61) is in a state identified by said fourth value (D) of said state variable.

6. Method according to any claim from 1 to 5, wherein said intermediate value (Vcol) between said upper (VOH) and lower (VOL) driving values of said transmitting means is essentially equally distant from said upper (VOH) and lower (VOL) values.

7. Method according to any claim from 1 to 6, further comprising the step of keeping at a predefined value said signal (Vbus) present on said data transferring means (1) when all of said transmitting means (11-14) are keeping their output at said neutral state.

8. Method according to any claim from 2 to 6, further comprising the step of identifying the possible presence of said faulty transmitting means (11 - 14) based on the detection of one of said transmitting means which does not collide with other of said transmitting means.

9. Apparatus for correcting transmission errors and detecting faults during data transmission through data transferring means (1) from a plurality of transmit units to at least one receive unit, each transmit unit transmitting data during a respective time slot according to a Time Division Multiple Access multiplexing criterion, each of said transmit units being connected to said data transferring means (1) via respective transmitting means (11-14), said data transferring means (1) being connected to a fixed reference source via first voltage dividing means (30), and said receive unit being connected to said data transferring means (1) via respective receiving means (40), said apparatus comprising:
means able to keep the output of said transmitting means (11-14) in a neutral state when the respective transmit units are not authorized to transmit during said time slot;
means able to drive in successive times the output of said transmitting means (11-14) to a upper or lower value based on data to be transmitted by said transmit unit which is authorized to transmit during said time slot;
second voltage dividing means (21-24) placed in series to said transmitting means (11-14) for driving the signal (Vbus) over said data transferring means (1) to an intermediate value (Vcol) between said upper (VOH) and lower (VOL) driving values, in presence of a collision condition over said data transferring means (1);
first means for detecting (51) if the signal value (Vbus) present over said data transferring means (1) at input of said receiving means (40) is greater or lower than a high threshold value (VHth);
second means for detecting (52) if the signal value (Vbus) present over said data transferring means (1) at input of said receiving means (40) is greater or lower than a low threshold value (VLth);
means for:
assigning a first predefined value (A) to a state variable of a finite state machine (61) of decoding means (60) of said receiving means (40) when said first detecting means (51) have detected that said signal (Vbus) present on said data transferring means (1) at input of said receiving means (40) is lower than said high threshold value (VHth) and said second detecting means (52) have detected that said signal (Vbus) present on said data transferring means (1) at input of said receiving means (40) is lower than said low threshold value (VLth);
assigning a second predefined value (B) to said state variable of said finite state machine (61) when said first detecting means (51) have detected that said signal (Vbus) present on said data transferring means (1) at input of said receiving means (40) is greater than said high threshold value (VHth) and said second detecting means (52) have detected that said signal (Vbus) present on said data transferring means (1) at input of said receiving means (40) is greater than said low threshold value (VLth);
assigning a third predefined value (C) to said state variable of said finite state machine (61) when said first detecting means (51) have detected that said signal (Vbus) present on said data transferring means (1) at input of said receiving means (40) is lower than said high threshold value (VHth), said second detecting means (52) have detected that said signal (Vbus) present on said data transferring means (1) at input of said receiving means (40) is greater than said low threshold value (VLth), and said state variable of said finite state machine (61) is equal to said first predefined value (A) or is equal to said third predefined value (C);
assigning a fourth predefined value (D) to said state variable of said finite state machine (61) when said first detecting means (51) have detected that said signal (Vbus) present on said data transferring means (1) at input of said receiving means (40) is lower than said high threshold value (VHth), said second detecting means (52) have detected that said signal (Vbus) present on said data transferring means (1) at input of said receiving means (40) is greater than said low threshold value (VLth), and said state variable of said finite state machine (61) is equal to said second predefined value (B) or is equal to said fourth predefined value (D);
means (60) for determining the correct value of data transmitted by said transmit unit, based on the state variable value (A, B, C, D) of said finite state machine (61), and outputting said correct value as receive data (DRx).

10. Apparatus according to claim 9, further comprising means (60) for detecting if there is a collision between said transmit units during the data transmission through said data transferring means (1), based on the state variable value (A, B, C, D) of said finite state machine (61), and outputting a collision detection (CDt) indication.

11. Apparatus according to claim 9 or 10, wherein said means (61) for detecting the correct value of said transmitted data and outputting said correct value as receive data (DRx) comprise further means for:
outputting a receive data (DRx) value equal to a first logical level, when said finite state machine (61) is in the state identified by said first value (A) of said state variable;
outputting a receive data (DRx) value equal to a second logical level, when said finite state machine (61) is in the state identified by said second value (B) of said state variable;
outputting a receive data (DRx) value equal to said second logical level, when said finite state machine (61) is in the state identified by said third value (C) of said state variable;
outputting a receive data (DRx) value equal to said first logical level, when said finite state machine (61) is in the state identified by said fourth value (D) of said state variable.

12. Apparatus according to claim 10 or 11, wherein said means (61) for detecting collision and outputting said collision detection indication (CDt) comprise further means for:
outputting an undetected collision (CDt=0) signal, when said finite state machine (61) is in the state identified by said first value (A) of said state variable;
outputting said undetected collision (CDt=0) signal, when said finite state machine (61) is in the state identified by said second value (B) of said state variable;
outputting a detected collision (CDt=1) signal, when said finite state machine (61) is in the state identified by said third value (C) of said state variable;
outputting said detected collision (CDt=1) signal, when said finite state machine (61) is in the state identified by said fourth value (D) of said state variable.

13. Apparatus according to claim 10 or 11, wherein said means (61) for detecting collision and outputting said collision detection indication (CDt) comprise further means for:
outputting an undetected collision (CDt=00) signal, when said finite state machine (61) is in the state identified by said first value (A) of said state variable;
outputting said undetected collision (CDt=00) signal, when said finite state machine (61) is in the state identified by said second value (B) of said state variable;
outputting a first detected collision (CDt=10) signal, when said finite state machine (61) is in the state identified by said third value (C) of said state variable;
outputting a second detected collision (CDt=11) signal, when said finite state machine (61) is in the state identified by said fourth value (D) of said state variable.

14. Apparatus according to claim 9, wherein said second voltage dividing means (21-24) placed in series to said transmitting means (11-14) is suitable to perform also a protection function of the related transmitting means when it is driving said data transferring means (1) to a signal value and there is a collision with a different of said transmitting means (11-14), which is trying to keep to an opposite value the signal (Vbus) on said data transferring means (1).

15. Apparatus according to any claim from 9 to 14, wherein said second voltage dividing means (21-24) placed in series to said transmitting means (11-14) is suitable to drive said intermediate value (Vcol) between said upper (VOH) and lower (VOL) values to a value which is essentially equally distant from said upper (VOH) and lower (VOL) values.

16. Apparatus according to any claim from 9 to 15, wherein said first voltage dividing means (30) is suitable to drive to a predefined value said signal (Vbus) present on said data transferring means (1) when all of said transmitting means (11-14) are keeping their output at said neutral state.

17. Apparatus according to any claim from 9 to 13, further comprising means able to identify the possible presence of said faulty transmitting means (11-14) based on the detection of one of said transmitting means which does not collide with other of said transmitting means.

18. Apparatus according to any claim from 9 to 17, wherein said second voltage dividing means (21-24) are comprised of resistors whose value of resistance is about 33 ohms.

19. Apparatus according to any claim from 9 to 18, wherein said second voltage dividing means (21-24) are comprised of a resistor whose value of resistance is about 10 kohms.

## Patentansprüche

1. Verfahren zum Korrigieren von Übertragungsfehlern und zum Erkennen von Defekten während der Datenübertragung über eine Datenübertragungseinrichtung (1) von einer Sendeeinheit zu mindestens einer Empfangseinheit, von denen jede Sendeeinheit Daten während eines zugehörigen Zeitschlitzes nach dem Zeitmultiplex-Mehrfachzugriffsverfahren sendet, jede der Sendeeinheiten an eine Datenübertragungseinrichtung (1) für eine zugehörige Sendeeinrichtung (11-14) angeschlossen ist, die Datenübertragungseinrichtung (1) über einen Spannungsteiler (30) an eine feste Referenzquelle (Vcc) angeschlossen ist und die Empfangseinheit über eine zugehörige Empfangseinrichtung (40) an die Datenübertragungseinrichtung (1) angeschlossen ist, umfassend folgende Schritte:
a) der Ausgang der Sendeeinrichtung (11-14) wird, wenn die betreffenden Sendeeinheiten während des genannten Zeitschlitzes nicht zum Senden autorisiert sind, in einem neutralen Zustand gehalten;
b) in aufeinanderfolgenden Zeiten wird der Ausgang der Sendeeinrichtung (11-14) basierend auf von der zum Senden während des Zeitschlitzes autorisierten Sendeeinheit zu sendenden Daten auf einen unteren oder einen oberen Wert getrieben;
c) der Vorgang des Treibens nach Schritt b) erfolgt bei Vorhandensein einer Kollisionsbedingung auf der Datenübertragungseinrichtung (1) hin zu einem Zwischenwert (Vcol) zwischen dem oberen (VOH) und dem unteren (VOL) Treiberwert;
d) es wird festgestellt, ob der auf der Datenübertragungseinrichtung (1) am Eingang der Empfangseinrichtung (40) vorhandene Signalwert (Vbus) größer oder niedriger ist als ein hoher Schwellenwert (VHth);
e) es wird festgestellt, ob der auf der Datenübertragungseinrichtung (1) am Eingang der Empfangseinrichtung (40) vorhandene Signalwert (Vbus) größer oder niedriger ist als ein niedriger Schwellenwert (VLth);
f1) einer Zustandsvariablen einer endlichen Zustandsmaschine (61) einer Dekodiereinrichtung (60) der Empfangseinrichtung (40) wird ein erster vordefinierter Wert (A) zugewiesen, wenn im Schritt d) das Signal (Vbus) auf der Datenübertragungseinrichtung (1) am Eingang der Empfangseinrichtung (40) sich als niedriger als der hohe Schwellenwert (VHth) erwiesen hat und im Schritt e) das Signal (Vbus) auf der Datenübertragungseinrichtung (1) am Eingang der Empfangseinrichtung (40) sich als niedriger als der niedrige Schwellenwert (VLth) erwiesen hat;
f2) der Zustandsvariablen der endlichen Zustandsmaschine (61) wird ein zweiter vordefinierter Wert (B) zugewiesen, wenn im Schritt d) das auf der Datenübertragungseinrichtung (1) am Eingang der Empfangseinrichtung (40) vorhandene Signal (Vbus) sich als größer als der hohe Schwellenwert (VHth) erwiesen hat und im Schritt e) sich das auf der Datenübertragungseinrichtung (1) am Eingang der Empfangseinrichtung (40) vorhandene Signal (Vbus) sich als größer als der niedrige Schwellenwert (VLth) erwiesen hat;
f3) der Zustandsvariablen der endlichen Zustandsmaschine (61) wird ein dritter vordefinierter Wert (C) zugewiesen, wenn im Schritt d) das auf der Datenverarbeitungseinrichtung (1) am Eingang der Empfangseinrichtung (40) vorhandene Signal (Vbus) sich als niedriger als der hohe Schwellenwert (VHth) erwiesen hat, sich im Schritt e) das auf der Datenübertragungseinrichtung (1) am Eingang der Empfangseinrichtung (40) vorhandene Signal (Vbus) sich als größer als der untere Schwellenwert (VLth) erwiesen hat, und die Zustandsvariable der endlichen Zustandsmaschine (61) dem ersten vordefinierten Wert (A) gleicht oder dem dritten vordefinierten Wert (C) gleicht;
f4) ein vierter vordefinierter Wert (D) wird der Zustandsvariablen der endlichen Zustandsmaschine (61) dann zugewiesen, wenn im Schritt d) das auf der Datenübertragungseinrichtung (1) am Eingang der Empfangseinrichtung (40) anstehende Signal (Vbus) sich als niedriger als der hohe Schwellenwert (VHth) erwiesen hat und im Schritt e) das auf der Datenübertragungseinrichtung (1) am Eingang der Empfangseinrichtung (40) anstehenden Signal (Vbus) sich als größer als der untere Schwellenwert (VLth) erwiesen hat und die Zustandsvariable der endlichen Zustandsmaschine (61) dem zweiten vordefinierten Wert (B) gleicht oder dem vierten vordefinierten Wert (D) gleicht;
g) Bestimmten des Korrekturwerts von durch die Sendeeinheit gesendeten Daten basierend auf dem Wert der Zustandsvariablen (A, B, C, D) der endlichen Zustandsmaschine (61) und Ausgeben des Korrekturwerts als Empfangsdaten (DRx).

2. Verfahren nach Anspruch 1, weiterhin umfassend den Schritt des Feststellens, ob es eine Kollision zwischen den Sendeeinheiten während der Datenübertragung über die Datenübertragungseinrichtung (1) gibt, basierend auf dem Wert (A, B, C, D) der Zustandsvariablen der endlichen Zustandsmaschine (61), und des Ausgebens einer Angabe eines Kollisionsnachweises (CDt).

3. Verfahren nach Anspruch 1 oder 2, bei dem der Schritt (g) des Bestimmens des korrekten Werts der gesendeten Daten und der Ausgabe des korrekten Werts als Empfangsdaten (DRx) weiterhin folgende Schritte aufweist:
g1) Ausgeben eines Empfangsdatenwerts (DRx) gleich einem ersten logischen Pegel, wenn die endliche Zustandsmaschine (61) sich in dem Zustand befindet, der durch den ersten Wert (A) der Zustandsvariablen gekennzeichnet ist;
g2) Ausgeben eines Empfangsdatenwerts (DRx) gleich einem zweiten logischen Pegel, wenn die endliche Zustandsmaschine (61) sich in dem Zustand befindet, der durch den zweiten Wert (B) der Zustandsvariablen gekennzeichnet ist;
g3) Ausgeben eines Empfangsdatenwerts (DRx) gleich dem zweiten logischen Pegel, wenn die endlichen Zustandsmaschine (61) sich in dem Zustand befindet, der durch den dritten Wert (C) der Zustandsvariablen gekennzeichnet ist;
g4) Ausgeben eines Empfangsdatenwerts (DRx) gleich dem ersten logischen Pegel, wenn die endliche Zustandsmaschine (61) sich in einem Zustand befindet, der durch den vierten Wert (D) der Zustandsvariablen gekennzeichnet ist.

4. Verfahren nach Anspruch 2 oder 3, bei dem der Schritt des Nachweisens der Kollision und der Ausgabe der Kollisions-Nachweisangabe (CDt) weiterhin folgende Schritte aufweist:
h1) Ausgeben eines einer nicht nachgewiesenen Kollision entsprechenden Signals (Cdt=0), wenn die endliche Zustandsmaschine (61) sich in einem Zustand befindet, der durch den ersten Wert (A) der Zustandsvariablen gekennzeichnet ist;
h2) Ausgeben des einer nicht nachgewiesenen Kollision (CDt=0) entsprechenden Signals, wenn die endliche Zustandsmaschine (61) sich in einem Zustand befindet, der durch zweiten Wert (B) der Zustandsvariablen gekennzeichnet ist;
h3) Ausgeben eines einer nachgewiesenen Kollision (CDt=1) entsprechenden Signals, wenn die endliche Zustandsmaschine (61) sich in einem Zustand befindet, der durch den dritten Wert (C) der Zustandsvariablen gekennzeichnet ist;
h4) Ausgeben eines einer nachgewiesenen Kollision (CDt=1) entsprechenden Signals, wenn die endliche Zustandsmaschine (61) sich in einem Zustand befindet, der durch den vierten Wert (D) der Zustandsvariablen gekennzeichnet ist.

5. Verfahren nach Anspruch 2 oder 3, bei dem der Schritt des Nachweisens der Kollision und der Ausgabe der Kollisions-Nachweisangabe (CDt) weiterhin die Schritte aufweist:
h1) Ausgeben des einer nicht nachgewiesenen Kollision entsprechenden Signals (Cdt=00), wenn die endliche Zustandsmaschine (61) sich in einem Zustand befindet, der durch ersten Wert (A) der Zustandsvariablen gekennzeichnet ist;
h2) Ausgeben des einer nicht nachgewiesenen Kollision entsprechenden Signals (Cdt=00), wenn die endliche Zustandsmaschine (61) sich in einem Zustand befindet, der durch zweiten Wert (B) der Zustandsvariablen gekennzeichnet ist;
h3) Ausgeben eines ersten, einer nachgewiesenen Kollision (CDt=10) entsprechenden Signals, wenn die endliche Zustandsmaschine (61) sich in einem Zustand befindet, der von dem dritten Wert (C) der Zustandsvariablen gekennzeichnet ist;
h4) Ausgeben eines zweiten, einer nachgewiesenen Kollision (CDt=11) entsprechenden Signals, wenn die endliche Zustandsmaschine (61) sich in einem Zustand befindet, der durch den vierten Wert (d) der Zustandsvariablen gekennzeichnet ist.

6. Verfahren nach einem der Ansprüche 1 bis 5, bei dem der Zwischenwert (Vcol) zwischen dem oberen (VOH) und dem unteren (VOL) Treiberwert der Sendeeinrichtung von dem oberen (VOH) und dem unteren (VOL) Wert im wesentlichen den gleichen Abstand hat.

7. Verfahren nach einem der Ansprüche 1 bis 6, weiterhin umfassend den Schritt, dass der auf der Datenübertragungseinrichtung (1) anstehende Signalwert (Vbus) auf einem vordefinierten Wert gehalten wird, wenn sämtliche Übertragungseinrichtungen (11-14) ihren Ausgang in einem neutralen Zustand halten.

8. Verfahren nach einem der Ansprüche 2 bis 6, weiterhin umfassend den Schritt des Erkennens des möglichen Vorhandenseins der gestörten Übertragungseinrichtung (11-14) anhand des Nachweises einer der Übertragungseinrichtungen, die nicht mit anderen Übertragungseinrichtungen kollidiert.

9. Vorrichtung zum Korrigieren von Übertragungsfehlern und zum Nachweisen von Störungen während der Datenübertragung über eine Datenübertragungseinrichtung (1) von einer Mehrzahl von Sendeeinheiten zumindestens einer Empfangseinheit, wobei jede Sendereinheit Daten während eines zugehörigen Zeitschlitzes nach dem Zeitmultiplex-Mehrfachzugriff-Verfahren überträgt, jede der Sendeeinheiten an die Datenübertragungseinrichtung (1) über eine zugehörige Sendeeinrichtung (11-14) angeschlossen ist, die Datenübertragungseinrichtung (1) über eine erste Spannungsteilereinrichtung (30) an eine feste Referenzquelle angeschlossen ist, und die Empfangseinheit an die Datenübertragungseinrichtung (1) über eine zugehörige Empfangseinrichtung (40) angeschlossen ist, umfassend:
eine Einrichtung, die in der Lage ist, den Ausgang der Sendeeinrichtung (11-14) in einem neutralen Zustand zu halten, wenn die betreffenden Sendeeinheiten zum Senden während des Zeitschlitzes nicht autorisiert sind;
eine Einrichtung, die in der Lage ist, zu aufeinanderfolgenden Zeiten den Ausgang der Sendeeinrichtung (11-14) basierend auf von der zum Senden während des Zeitschlitzes autorisierten Sendeeinheit zu sendenden Daten auf einen oberen oder einen unteren Wert zu treiben;
eine zweite Spannungsteilereinrichtung (21-24), die in Reihe zu der Sendeeinrichtung (11-14) geschaltet ist, um das Signal (Vbus) über die Datenübertragungseinrichtung (1) auf einen Zwischenwert (Vcol) zwischen dem oberen (VOH) und dem unteren (VOL) Treiberwert zu bringen, wenn es einen Kollisionszustand auf der Datenübertragungseinrichtung (1) gibt;
eine erste Detektoreinrichtung (51), die feststellt, ob der Signalwert (Vbus) auf der Datenübertragungseinrichtung (1) am Eingang der Empfangseinrichtung (40) größer oder kleiner ist als ein hoher Schwellenwert (VHth);
eine zweite Detektoreinrichtung (52) zum Feststellen, ob der auf der Datenübertragungseinrichtung (1) am Eingang der Empfangseinrichtung (40) anstehende Signalwert (Vbus) größer oder kleiner ist als ein niedriger Schwellenwert (VLth);
eine Einrichtung, weiche
einer Zustandsvariablen einer endlichen Zustandsmaschine (61) einer Dekodiereinrichtung (60) der Empfangseinrichtung (40) einen ersten vordefinierten Wert (A) zuweist, wenn die erste Detektoreinrichtung (51) festgestellt hat, dass das auf der Datenübertragungseinrichtung (1) am Eingang der Empfangseinrichtung (40) anstehende Signal (Vbus) kleiner ist als der hohe Schwellenwert (VHth), und die zweite Detektoreinrichtung (52) festgestellt hat, dass das auf der Datenübertragungseinrichtung (1) am Eingang der Empfangseinrichtung (40) anstehende Signal (Vbus) niedriger als der niedrige Schwellenwert (VLth) ist;
der Zustandsvariablen der endlichen Zustandsmaschine (61) einen zweiten vordefinierten Wert (B) zuweist, wenn die erste Detektoreinrichtung (51) festgestellt hat, dass das auf der Datenübertragungseinrichtung (1) am Eingang der Empfangseinrichtung (40) anstehende Signal (Vbus) größer ist als der hohe Schwellenwert (VHth), und die zweite Detektoreinrichtung (42) festgestellt hat, dass das auf der Übertragungseinrichtung (1) am Eingang der Empfangseinrichtung (40) anstehende Signal (Vbus) größer als der niedrige Schwellenwert (VLth) ist;
der Zustandsvariablen der endlichen Zustandsmaschine einen dritten vordefinierten Wert (C) zuweist, wenn die erste Detektoreinrichtung (51) festgestellt hat, dass das auf der Datenübertragungseinrichtung (1) am Eingang der Empfangseinrichtung (40) anstehende Signal (Vbus) niedriger ist als der hohe Schwellenwert (VHth), die zweite Detektoreinrichtung (52) festgestellt hat, dass das auf der Datenübertragungseinrichtung (1) am Eingang der Empfangseinrichtung (40) anstehende Signal (Vbus) größer als der niedrige Schwellenwert (VLth) ist, und die Zustandsvariable der endlichen Zustandsmaschine (61) dem ersten vordefinierten Wert (A) gleicht oder dem dritten vordefinierten Wert (C) gleicht;
der Zustandsvariablen der endlichen Zustandsmaschine (61) einen vierten vordefinierten Wert (D) zuweist, wenn die erste Detektoreinrichtung (51) festgestellt hat, dass das auf der Datenübertragungseinrichtung (1) am Eingang der Empfangseinrichtung (40) anstehende Signal (Vbus) niedriger ist als der hohe Schwellenwert (VHth), die zweite Detektoreinrichtung (52) festgestellt hat, dass das auf der Datenübertragungseinrichtung (1) am Eingang der Empfangseinrichtung (40) anstehende Signal (Vbus) größer ist als der niedrige Schwellenwert (VLth), und die Zustandsvariable der endlichen Zustandsmaschine (61) dem zweiten vordefinierten Wert (B) gleicht oder dem vierten vordefinierten Wert (D) gleicht;
eine Einrichtung (60) zum Festlegen des korrekten Werts der von der Sendeeinrichtung gesendeten Daten, basierend auf dem Wert der Zustandsvariablen (A, B, C, D) der endlichen Zustandsmaschine (61), und zum Ausgeben des korrekten Werts als Empfangsdaten (DRx).

10. Vorrichtung nach Anspruch 9, weiterhin umfassend eine Einrichtung (60) zum Feststellen, ob es eine Kollision zwischen den Sendeeinheiten während der Datenübertragung über die Datenübertragungseinrichtung (1) gibt, basierend auf dem Wert der Zustandsvariablen (A, B, C, D) der endlichen Zustandsmaschine (61), und zum Ausgeben einer Kollisionsnachweisangabe (Cdt).

11. Vorrichtung nach Anspruch 9 oder 10, bei der die Einrichtung (61) zum Feststellen des korrekten Werts der gesendeten Daten und zum Ausgeben des korrekten Werts als Empfangsdaten (DRx) eine Einrichtung aufweist zum:
Ausgeben eines Empfangsdatenwerts (DRx) gleich einem ersten logischen Pegel, wenn die endliche Zustandsmaschine (61) sich in dem Zustand befindet, der durch den ersten Wert (A) der Zustandsvariablen gekennzeichnet ist;
Ausgeben eines Empfangsdatenwerts (DRx) gleich einem zweiten logischen Pegel, wenn die endliche Zustandsmaschine (61) sich in dem Zustand befindet, der durch den zweiten Wert (B) der Zustandsvariablen gekennzeichnet ist;
Ausgeben eines Empfangsdatenwerts (DRx) gleich dem zweiten logischen Pegel, wenn die endlichen Zustandsmaschine (61) sich in dem Zustand befindet, der durch den dritten Wert (C) der Zustandsvariablen gekennzeichnet ist;
Ausgeben eines Empfangsdatenwerts (DRx) gleich dem ersten logischen Pegel, wenn die endliche Zustandsmaschine (61) sich in einem Zustand befindet, der durch den vierten Wert (D) der Zustandsvariablen gekennzeichnet ist.

12. Vorrichtung nach Anspruch 10 oder 11, bei der die Einrichtung (61) zum Nachweisen einer Kollision und zum Ausgeben der Kollisionsnachweisangabe (CDt) weiterhin eine Einrichtung aufweist zum:
Ausgeben eines einer nicht nachgewiesenen Kollision entsprechenden Signals (Cdt=0), wenn die endliche Zustandsmaschine (61) sich in einem Zustand befindet, der durch den ersten Wert (A) der Zustandsvariablen gekennzeichnet ist;
Ausgeben des einer nicht nachgewiesenen Kollision (CDt=0) entsprechenden Signals, wenn die endliche Zustandsmaschine (61) sich in einem Zustand befindet, der durch zweiten Wert (B) der Zustandsvariablen gekennzeichnet ist;
Ausgeben eines einer nachgewiesenen Kollision (CDt=1) entsprechenden Signals, wenn die endliche Zustandsmaschine (61) sich in einem Zustand befindet, der durch den dritten Wert (C) der Zustandsvariablen gekennzeichnet ist;
Ausgeben eines einer nachgewiesenen Kollision (CDt=1) entsprechenden Signals, wenn die endliche Zustandsmaschine (61) sich in einem Zustand befindet, der durch den vierten Wert (D) der Zustandsvariablen gekennzeichnet ist.

13. Vorrichtung nach Anspruch 10 oder 11, wobei der die Einrichtung (61) zum Nachweisen einer Kollision und zum Ausgeben der Kollisionsnachweisangabe (CDt) weiterhin eine Einrichtung aufweist zum:
Ausgeben des einer nicht nachgewiesenen Kollision entsprechenden Signals (CDt=00), wenn die endliche Zustandsmaschine (61) sich in einem Zustand befindet, der durch ersten Wert (A) der Zustandsvariablen gekennzeichnet ist;
Ausgeben des einer nicht nachgewiesenen Kollision entsprechenden Signals (CDt=00), wenn die endliche Zustandsmaschine (61) sich in einem Zustand befindet, der durch zweiten Wert (B) der Zustandsvariablen gekennzeichnet ist;
Ausgeben eines ersten, einer nachgewiesenen Kollision (CDt=10) entsprechenden Signals, wenn die endliche Zustandsmaschine (61) sich in einem Zustand befindet, der von dem dritten Wert (C) der Zustandsvariablen gekennzeichnet ist;
Ausgeben eines zweiten, einer nachgewiesenen Kollision (CDt=11) entsprechenden Signals, wenn die endliche Zustandsmaschine (61) sich in einem Zustand befindet, der durch den vierten Wert (d) der Zustandsvariablen gekennzeichnet ist.

14. Vorrichtung nach Anspruch 9, bei der zweite Spannungsteilereinrichtung (21-24), die zu der Sendeeinrichtung (11-14) in Reihe geschaltet ist, dazu ausgelegt ist, auch eine Schutzfunktion der betreffenden Sendeeinrichtung dann zu übernehmen, wenn sie die Datenübertragungseinrichtung (1) auf einen Signalwert treibt und es eine Kollision mit einer anderen Sendeeinrichtung (11-14) gibt, die versucht, auf der Datenübertragungseinrichtung (1) einen entgegengesetzten Signalwert (Vbus) zu halten.

15. Vorrichtung nach einem der Ansprüche 9 bis 14, bei der die zweite Spannungsteilereinrichtung (21-24), die zu der Sendeeinrichtung (11-14) in Reihe geschaltet ist, dazu ausgelegt ist, den Zwischenwert (Vcol) zwischen dem oberen (VOH) und dem unteren (VOL) Wert auf einen Wert zu bringen, der von dem oberen (VOH) und dem unteren (VOL) Wert im wesentlichen den gleichen Abstand hat.

16. Vorrichtung nach einem der Ansprüche 9 bis 15, bei der die erste Spannungsteilereinrichtung (30) dazu ausgelegt ist, das auf der Datenübertragungseinrichtung (1) anstehende Signal (Vbus) auf einen vordefinierten Wert zu bringen, wenn sämtliche Sendeeinrichtungen (11-14) ihren Ausgang in dem Normalzustand halten.

17. Vorrichtung nach einem der Ansprüche 9 bis 13, weiterhin umfassend eine Einrichtung, die in der Lage ist, das mögliche Vorhandensein der gestörten Sendeeinrichtung (11-14) basierend darauf zu erkennen, dass eine der Sendeeinrichtungen festgestellt wird, die nicht mit einer anderen Sendeeinrichtung kollidiert.

18. Vorrichtung nach einem der Ansprüche 9-17, bei der die zweite Spannungsteilereinrichtung (21-24) aus Widerständen gebildet ist, deren Widerstandswert etwa 33 Ohm beträgt.

19. Vorrichtung nach einem der Ansprüche 9-18, bei der die zweite Spannungsteilereinrichtung (21-24) einen Widerstand aufweist, dessen Widerstandswert etwa 10 kOhm beträgt.

## Revendications

1. Procédé de correction d'erreurs de transmission et de détection de défauts pendant une transmission de données par un moyen de transfert de données (1), à partir d'au moins un module d'émission vers au moins un module de réception, chaque module d'émission émettant des données pendant un créneau temporel respectif selon un critère de multiplexage à accès multiple par division dans le temps, chacun des modules d'émission étant connecté au moyen de transfert de données (1) par l'intermédiaire de moyens d'émission (11-14) respectifs, le moyen de transfert de données (1) étant connecté à une source de référence fixe (Vcc) par l'intermédiaire d'un diviseur de tension (30), et le module de réception étant connecté au moyen de transfert de données (1) par l'intermédiaire d'un moyen de réception (40) respectif, ce procédé comprenant les étapes suivantes :
a) maintenir la sortie des moyens d'émission (11-14) dans un état neutre quand les modules d'émission respectifs ne sont pas autorisés à émettre pendant ledit créneau temporel ;
b) piloter pendant des durées successives la sortie des moyens d'émission (11-14) vers une valeur inférieure ou supérieure selon les données à émettre par le module d'émission qui est autorisé à émettre pendant le créneau temporel ;
c) réaliser l'opération de pilotage de l'étape b) à une valeur intermédiaire (Vcol) entre les valeurs de pilotage haute (VOH) et basse (VOL) en présence d'un état de collision sur le moyen de transfert de données (1) ;
d) détecter si la valeur de signal (Vbus) présente sur le moyen de transfert de données (1) à l'entrée du moyen de réception (40) est supérieure ou inférieure à une valeur de seuil haute (VHth) ;
e) détecter si la valeur de signal (Vbus) présente sur le moyen de transfert de données (1) à l'entrée du moyen de réception (40) est supérieure ou inférieure à une valeur de seuil basse (VLth) ;
f1) affecter une première valeur prédéfinie (A) à une variable d'état d'une machine à états finis (61) d'un moyen de décodage (60) du moyen de réception (40) quand, à l'étape d), le signal (Vbus) présent sur le moyen de transfert de données (1) à l'entrée du moyen de réception (40) a été détecté comme étant inférieur à la valeur de seuil haute (VHth) et, à l'étape e), le signal (Vbus) présent sur le moyen de transfert de données (1) à l'entrée du moyen de réception (40) a été détecté comme étant inférieur à la valeur de seuil basse (VLth) ;
f2) affecter une seconde valeur prédéfinie (B) à ladite variable d'état de la machine à états finis (61) quand, à l'étape d), le signal (Vbus) présent sur le moyen de transfert de données (1) à l'entrée du moyen de réception (40) a été détecté comme étant supérieur à la valeur de seuil haute (VHth) et, à l'étape e), le signal (Vbus) présent sur le moyen de transfert de données (1) à l'entrée du moyen de réception (40) a été détecté comme étant supérieur à la valeur de seuil basse (VLth) ;
f3) affecter une troisième valeur prédéfinie (C) à ladite variable d'état de la machine à états finis (61) quand, à l' étape d) , le signal (Vbus) présent sur le moyen de transfert de données (1) à l'entrée du moyen de réception (40) a été détecté comme inférieur à la valeur de seuil haute (VHth), à l'étape e), le signal (Vbus) présent sur le moyen de transfert de données (1) à l'entrée du moyen de réception (40) a été détecté comme supérieur à la valeur de seuil basse (VLth), et ladite variable d'état de la machine à états finis (61) est égale à la première valeur prédéfinie (A) ou à la troisième valeur prédéfinie (C) ;
f4) affecter une quatrième valeur prédéfinie (D) à la variable d'état de la machine à états finis (61) quand, à l' étape d), le signal (Vbus) présent sur le moyen de transfert de données (1) à l'entrée du moyen de réception (40) a été détecté comme inférieur à la valeur de seuil haute (VHth), à l'étape e), le signal (Vbus) présent sur le moyen de transfert de données (1) à l'entrée des moyens de réception (40) a été détecté comme supérieur à la valeur de seuil basse (VLth), et la variable d'état de la machine à états finis (61) est égale à la deuxième valeur prédéfinie (B) ou à la quatrième valeur prédéfinie (D) ; et
g) déterminer la valeur correcte des données émises par le module d'émission, sur la base de la valeur de variable d'état (A, B, C, D) de la machine à états finis (61) , et fournir la valeur correcte en tant que donnée reçue (DRx).

2. Procédé selon la revendication 1, comprenant en outre l'étape de détection d'une éventuelle collision entre les modules d'émission pendant l'émission de données par l'intermédiaire du moyen de transfert de données (1), sur la base de la valeur (A, B, C, D) de la variable d'état de la machine à états finis (61), et de fourniture d'une indication de détection de collision (CDt).

3. Procédé selon la revendication 1 ou 2, dans lequel l'étape g) de détermination de la valeur correcte de la donnée émise et de fourniture de la valeur correcte en tant que donnée reçue (DRx) comprend en outre les étapes suivantes :
g1) fournir une valeur de donnée reçue (DRx) égale à un premier niveau logique quand la machine à états finis (61) est dans l'état identifié par la première valeur (A) de la variable d'état ;
g2) fournir une valeur de donnée reçue (DRx) égale à un second niveau logique quand la machine à états finis (61) est dans l'état identifié par la seconde valeur (B) de la variable d'état ;
g3) fournir une valeur de donnée reçue (DRx) égale au second niveau logique quand la machine à états finis (61) est dans l'état identifié par la troisième valeur (C) de la variable d'état ; et
g4) fournir une valeur de donnée reçue (DRx) égale au premier niveau logique quand la machine à états finis (61) est dans l'état identifié par la quatrième valeur (D) de la variable d'état.

4. Procédé selon la revendication 2 ou 3, dans lequel l'étape de détection de collision et de fourniture de l'indication de détection de collision (CDt) comprend en outre les étapes suivantes :
h1) fournir un signal de collision non détectée (CDt=0) quand la machine à états finis (61) est dans un état identifié par la première valeur (A) de la variable d'état ;
h2) fournir le signal de collision non détectée (CDt=0) quand la machine à états finis (61) est dans un état identifié par la deuxième valeur (B) de la variable d'état ;
h3) fournir un signal de collision détectée (CDt=1) quand la machine à états finis (61) est dans un état identifié par la troisième valeur (C) de la variable d'état ; et
h4) fournir un signal de collision détectée (CDt=1) quand la machine à états finis (61) est dans un état identifié par la quatrième valeur (D) de la variable d'état.

5. Procédé selon la revendication 2 ou 3, dans lequel l'étape de détection de collision et de fourniture de l'indication de détection de collision (CDt) comprend en outre les étapes suivantes :
h1) fournir un signal de collision non détectée (CDt=00) quand la machine à états finis (61) est dans un état identifié par la première valeur (A) de la variable d'état ;
h2) fournir le signal de collision non détectée (CDt=00) quand la machine à états finis (61) est dans un état identifié par la deuxième valeur (B) de la variable d'état ;
h3) fournir un premier signal de collision détectée (CDt=10) quand la machine à états finis (61) est dans un état identifié par la troisième valeur (C) de la variable d'état ; et
h4) fournir un deuxième signal de collision détectée (CDt=11) quand la machine à états finis (61) est dans un état identifié par la quatrième valeur (D) de la variable d'état.

6. Procédé selon l'une quelconque des revendications 1 à 5, dans lequel la valeur intermédiaire (Vcol) entre les valeurs de pilotage haute (VOH) et basse (VOL) des moyens d'émission (11-14) est sensiblement à mi-distance des valeurs haute (VOH) et basse (VOL).

7. Procédé selon l'une quelconque des revendications 1 à 6, comprenant en outre l'étape consistant à maintenir à une valeur prédéfinie le signal (Vbus) présent sur le moyen de transfert de données (1) quand tous les moyens d'émission (11-14) maintiennent leur sortie à l'état neutre.

8. Procédé selon l'une quelconque des revendications 2 à 6, comprenant en outre l'étape d'identification de la présence possible des moyens d'émission (11-14) en défaut sur la base de la détection du fait que l'un des moyens d'émission n'est pas en collision avec un autre des moyens d'émission.

9. Dispositif pour corriger des erreurs de transmission et détecter des défauts pendant une transmission de données par l'intermédiaire d'un moyen de transfert de données (1) à partir d'une pluralité de modules d'émission vers au moins un module de réception, chaque module d'émission émettant des données pendant un créneau temporel respectif selon un critère de multiplexage à accès multiple par division dans le temps, chacun des modules d'émission étant connecté au moyen de transfert de données (1) par l'intermédiaire de moyens d'émission (11-14) respectifs, les moyens de transfert de données (1) étant connectés à une source de référence fixe par l'intermédiaire d'un premier moyen de division de tension (30), et le module de réception étant connecté au moyen de transfert de données (1) par l'intermédiaire d'un moyen de réception (40) respectif, le dispositif comprenant :
des moyens aptes à maintenir la sortie des moyens d'émission (11-14) dans un état neutre quand les modules d'émission respectifs ne sont pas autorisés à émettre pendant le créneau temporel ;
des moyens aptes à piloter pendant des instants successifs la sortie des moyens d'émission (11-14) vers une valeur supérieure ou inférieure sur la base des données à émettre par le module d'émission qui est autorisé à émettre pendant le créneau temporel ;
un second moyen de division de tension (21-24) placé en série avec les moyens d'émission (11-14) pour piloter le signal (Vbus) du moyen de transfert de données (1) vers une valeur intermédiaire (Vcol) entre les valeurs de pilotage supérieure (VOH) et inférieure (VOL) en présence d'un état de collision sur le moyen de transfert de données (1) ;
des premiers moyens (51) pour détecter si la valeur de signal (Vbus) présente sur le moyen de transfert de données (1) à l'entrée du moyen de réception (40) est supérieure ou inférieure à une valeur de seuil haute (VHth) ;
des seconds moyens (52) pour détecter si la valeur de signal (Vbus) présente sur le moyen de transfert de données (1) à l'entrée du moyen de réception (40) est supérieure ou inférieure à une valeur de seuil basse (VLth) ;
des moyens pour :
affecter une première valeur prédéfinie (A) à une variable d'état d'une machine à états finis (61) de moyens de décodage (60) du moyen de réception (40) quand les premiers moyens de détection (51) ont détecté que le signal (Vbus) présent sur le moyen de transfert de données (1) à l'entrée du moyen de réception (40) est inférieur à la valeur de seuil haute (VHth) et que les seconds moyens de détection (52) ont détecté que le signal (Vbus) présent sur le moyen de transfert de données (1) à l'entrée du moyen de réception (40) est inférieur à la valeur de seuil basse (VLth) ;
affecter une seconde valeur prédéfinie (B) à ladite variable d'état de la machine à états finis (61) quand les premiers moyens de détection (51) ont détecté que le signal (Vbus) présent sur le moyen de transfert de données (1) à l'entrée du moyen de réception (40) est supérieur à la valeur de seuil haute (VHth), et que les seconds moyens de détection (52) ont détecté que le signal (Vbus) présent sur le moyen de transfert de données (1) à l'entrée du moyen de réception (40) est supérieur à la valeur de seuil basse (VLth) ;
affecter une troisième valeur prédéfinie (C) à ladite variable d'état de la machine à états finis (61) quand les premiers moyens de détection (51) ont détecté que le signal (Vbus) présent sur le moyen de transfert de données (1) à l'entrée du moyen de réception (40) est inférieur à la valeur de seuil haute (VHth), les seconds moyens de détection (52) ont détecté que le signal (Vbus) présent sur le moyen de transfert de données (1) à l'entrée du moyen de réception (40) est supérieur à la valeur de seuil basse (VLth), et ladite variable d'état de la machine à états finis (61) est égale à la première valeur prédéfinie (A) ou à la troisième valeur prédéfinie (C) ;
affecter une quatrième valeur prédéfinie (D) à la variable d'état de la machine à états finis (61) quand les premiers moyens de détection (51) ont détecté que le signal (Vbus) présent sur le moyen de transfert de données (1) à l'entrée du moyen de réception (40) est inférieur à la valeur de seuil haute (VHth), les seconds moyens de détection (52) ont détecté que le signal (Vbus) présent sur le moyen de transfert de données (1) à l'entrée du moyen de réception (40) est supérieur à la valeur de seuil basse (VLth), et la variable d'état de la machine à états finis (61) est égale à la deuxième valeur prédéfinie (B) ou à la quatrième valeur prédéfinie (D) ; et
des moyens (60) pour déterminer la valeur correcte des données émises par le module d'émission, sur la base de la valeur de variable d'état (A, B, C, D) de la machine à états finis (61), et fournir la valeur correcte en tant que donnée reçue (DRx).

10. Dispositif selon la revendication 9, comprenant en outre des moyens (60) de détection d'une éventuelle collision entre les modules d'émission pendant l'émission de données par l'intermédiaire du moyen de transfert de données (1), sur la base de la valeur (A, B, C, D) de la variable d'état de la machine à états finis (61), et de fourniture d'une indication de détection de collision (CDt).

11. Dispositif selon la revendication 9 ou 10, dans lequel les moyens (61) de détermination de la valeur correcte de la donnée émise et de fourniture de la valeur correcte en tant que donnée reçue (DRx) comprennent en outre des moyens pour :
fournir une valeur de donnée reçue (DRx) égale à un premier niveau logique quand la machine à états finis (61) est dans l'état identifié par la première valeur (A) de la variable d'état ;
fournir une valeur de donnée reçue (DRx) égale à un second niveau logique quand la machine à états finis (61) est dans l'état identifié par la seconde valeur (B) de la variable d'état ;
fournir une valeur de donnée reçue (DRx) égale au second niveau logique quand la machine à états finis (61) est dans l'état identifié par la troisième valeur (C) de la variable d'état ; et
fournir une valeur de donnée reçue (DRx) égale au premier niveau logique quand la machine à états finis (61) est dans l'état identifié par la quatrième valeur (D) de la variable d'état.

12. Dispositif selon la revendication 10 ou 11, dans lequel les moyens (61) de détection de collision et de fourniture de l'indication de détection de collision (CDt) comprennent en outre des moyens pour :
fournir un signal de collision non détectée (CDt=0) quand la machine à états finis (61) est dans un état identifié par la première valeur (A) de la variable d'état ;
fournir le signal de collision non détectée (CDt=0) quand la machine à états finis (61) est dans un état identifié par la deuxième valeur (B) de la variable d'état ;
fournir un signal de collision détectée (CDt=1) quand la machine à états finis (61) est dans un état identifié par la troisième valeur (C) de la variable d'état ; et
fournir un signal de collision détectée (CDt=1) quand la machine à états finis (61) est dans un état identifié par la quatrième valeur (D) de la variable d'état.

13. Dispositif selon la revendication 10 ou 11, dans lequel les moyens (61) de détection de collision et de fourniture de l'indication de détection de collision (CDt) comprennent en outre des moyens pour :
fournir un signal de collision non détectée (CDt=00) quand la machine à états finis (61) est dans un état identifié par la première valeur (A) de la variable d'état ;
fournir le signal de collision non détectée (CDt=00) quand la machine à états finis (61) est dans un état identifié par la deuxième valeur (B) de la variable d'état ;
fournir un premier signal de collision détectée (CDt =10) quand la machine à états finis (61) est dans un état identifié par la troisième valeur (C) de la variable d'état ; et
fournir un deuxième signal de collision détectée (CDt=11) quand la machine à états finis (61) est dans un état identifié par la quatrième valeur (D) de la variable d'état.

14. Dispositif selon la revendication 9, dans lequel le second moyen de division de tension (21-24) placé en série avec les moyens d'émission (11-14) est adapté à réaliser également une fonction de protection du moyen d'émission associé quand il pilote le moyen de transfert de données (1) vers des valeurs de signal et qu'il y a une collision avec l'un différent des moyens d'émission (11-14) qui essaye de maintenir à une valeur opposée le signal (Vbus) sur le moyen de transfert de données (1).

15. Dispositif selon l'une quelconque des revendications 9 à 14, dans lequel le second moyen de division de tension (21-24) placé en série avec les moyens d'émission (11-14) est propre à piloter la valeur intermédiaire (Vcol) entre les valeurs supérieure (VOH) et inférieure (VOL) sensiblement à mi-distance des valeurs supérieure (VOH) et inférieure (VOL).

16. Dispositif selon l'une quelconque des revendications 9 à 15, dans lequel le premier moyen de division de tension (30) est adapté à piloter à une valeur prédéfinie le signal (Vbus) présent sur le moyen de transfert de données (1) quand tous les moyens d'émission (11-14) maintiennent leur sortie à l'état neutre.

17. Dispositif selon l'une quelconque des revendications 9 à 13, comprenant en outre des moyens aptes à identifier la présence éventuelle des moyens d'émission (11-14) en défaut sur la base de la détection de l'un des moyens d'émission qui n'est pas en collision avec un autre moyen d'émission.

18. Dispositif selon l'une quelconque des revendications 9 à 17, dans lequel le second moyen de division (21-24) est constitué de résistance dont la valeur est d'environ 33 ohms.

19. Dispositif selon l'une quelconque des revendications 9 à 18, dans lequel le second moyen de division (21-24) est constitué de résistance dont la valeur est sensiblement égale à 10 kohms.
